# EUROPEAN PATENT SPECIFICATION

(11) **EP 2 042 639 B1**
(45) Date of publication and mention of the grant of the patent: **26.09.2012**
(21) Application number: 07788624.0
(22) Date of filing: 22.06.2007
(51) Int. Cl.: D06F 37/26

(54) **LIGHTWEIGHT WASHTUB STRUCTURE FOR WASHING MACHINE**
WASCHMASCHINENBOTTICHLEICHTKONSTRUKTION
STRUCTURE LÉGÈRE DE CUVE POUR LAVE-LINGE

(30) Priority: 22.06.2006 ES 200601507 U
(43) Date of publication of application: 01.04.2009
(73) Proprietor: Fundación AITIIP, 50014 Zaragoza (ES)
(72) Inventor: FERNANDEZ CUELLO, Angel, E-50014 Zaragoza (ES); RIVERA FERRER, Víctor, E-50014 Zaragoza (ES); TOMEY ALTENDORFER, Gregorio, E-50014 Zaragoza (ES); MUNIESA MURILLO, Manuel, E-50014 Zaragoza (ES); MATE NAYA, Fernando, E-50014 Zaragoza (ES)
(74) Representative: Schäfer, Matthias W.
(86) International application number: PCT/ES2007/000376
(87) International publication number: WO 2008/000873

(56) References cited:
- EP-A1- 1 538 252
- DE-A1- 10 216 517
- DE-U1- 8 613 673
- ES-T3- 2 166 493
- ES-U- 1 022 932
- ES-U- 1 041 741

## Description

As indicated in the title, the present description refers to a lightweight washtub structure for washing machine, of the type used in automatic washing machines as a static support for the rotary drum, maintaining adequate leaktightness, characterized by an alveolar structure formed from injected thermoplastic material which includes in said material a large quantity of diminutive holes of spherical or quasi-spherical shape and of random distribution, that lighten the weight of washtub without detriment to its mechanical properties or leaktightness.

At present washing machines of the automatic type are commonly used, most of these being of the rotary drum type that include a washtub to store the washing water, a metal drum mounted in a rotary manner inside the washtub, placed horizontal to the ground or at an angle to the ground, to hold dirty clothes inside, a shaft connected to the drum mounted inside the washtub that passes through one of the walls of said washtub by means of the necessary tight bearings or ball bearings, for the transmission of a driving force coming from an electric motor, an access door to load and unload dirty clothes, normally located at the end opposite to the rotation shaft and linked to the washtub by means of a flexible tubular bellows that ensures the leaktightness of the assembly. The washtub and therefore the drum housed inside it, is suspended from the casing of the washing machine by means of springs or dampeners and is fitted with counterweights to stabilize the assembly during drum rotation and centrifuging.

The washtub of the washing machine is preferably cylindrical in shape, horizontally placed, with one of its bases that corresponds to the access door, open. In order to facilitate the manufacture of the washtub of the washing machine it is common practice, although not essential, for the washtub to be made in two parts, connected together to form the assembly by means of tabs, couplings, pins or another conventional mechanical means of attachment as described, for example, in Patent 200202160 *"Washing machine washtub",* in Patent 009700386 "*System of attachment between the two parts of a washing machine washtub"* or in Patent 009800348 *"System of attachment of the two halves of a plastic washing machine washtub".*

For a long time it has been common practice in the manufacture of washtubs to use shaped metal sheets welded together in different configurations. Such constructions can be found in Utility Model 8803585 *"Metallic washtub for washing machine*" and in Patent 8902719 *"Washtub for washing machine"* but they offer numerous drawbacks mainly due to rusting caused by the water contained inside them, their heavy weight and their high economic manufacturing cost, which has led to them being used less and less frequently.

Also there are a great variety of washtub models commonly known in the current state of the art and frequently used that are chiefly made of thermoplastic materials, plastics, resins or similar materials, such as those claimed in European Patent 97114224 *"Washing machine with plastic washtub",* in European Patent 87402531 *"Washing machine for clothes provided with a washtub in synthetic material",* in Patent 9600222 *"Closure system of plastic washing machine washtub",* in Patent 9600221 *"Perfected plastic washtub for washing machine"* and in the aforementioned Patent 009800348 *"System of attachment of the two halves of a plastic washing machine washtub"*. These devices, in spite of reducing the cost of the washtub production process and hence that of the washing machine, increasing the duration of the washtub, still present the chief problem that, because they are all made from thermoplastics or equivalent materials, normally by moulding or injection, in order to maintain the appropriate rigidity and resistance in accordance with their use they must have solid walls with numerous reinforcement ribs and have a considerable thickness, the cost of which affects the end price of the assembly, especially taking into consideration the large proportions of the washtub and the moulds required to produce the parts that form it.

To resolve the current existing problems in the manufacture of washing machine washtubs, in order to obtain a washtub with a lower economic cost, making it more competitive without detriment to its performance, the lightweight structure of the washtub that is the subject matter of the present invention has been designed, being made by means of walls with an alveolar structure, formed by material, preferably mould-injected thermoplastic material, which includes in said material a large quantity of diminutive holes of spherical or quasi-spherical shape, of variable size and of random distribution, giving rise to a lightening of the weight of the washtub without detriment to its mechanical properties or leaktightness.

The targe number of holes or cavities of a spherical or quasi-spherical shape inserted in the material of the walls are of a sufficiently small size as to not reduce the leaktightness of the washtub but to allow a considerable lightening of the washtub, with the subsequent saving in the thermoplastic material used in its manufacture. The characteristic alveolar structure provides, by means of its high structural resistance characteristic of the walls of the spherical or quasi-spherical holes or cavities, together with the continuity of the material, a rigidity and resistance that is in accordance with its use and which clearly exceeds the mechanical characteristics of conventionally used solid walls.

This alveolar structure can be achieved using any of the existing and commonly known technologies and thermoplastic injection machines that allow the addition of gas to the thermoplastic material to form small bubbles during injection for their subsequent precipitation, spindles with gas input, micro-cellular foams or similar foamed materials.

The external embodiment of the washtub is performed in two parts, linked together to form the assembly by means of various tabs, couplings, pins or other conventionally used mechanical means, adopting the opportune structural modifications in walls, ribs and reinforcements that are necessary in accordance with the technology used.

This lightweight washtub structure for washing machine that is disclosed provides a number of advantages over the devices currently available, the most significant being the fact that it is possible to produce it with a smaller quantity of thermoplastic material by virtue of its lightened structure, thereby achieving a lower economic cost that makes it more competitive without detriment to its structural performance levels.

Another significant advantage obtained is the fact that the rigidity and resistance achieved are in accordance with its use, using a much smaller amount of thermoplastic material, clearly exceeding the mechanical characteristics of the conventionally used solid walls thanks to the alveolar structure and the high resistance of the walls of the spherical or quasi-spherical holes or cavities as well as the continuity of the material.

Another advantage of the present invention is that only small modifications to the moulds are required for this washtub compared to conventional thermoplastic washtubs with solid walls.

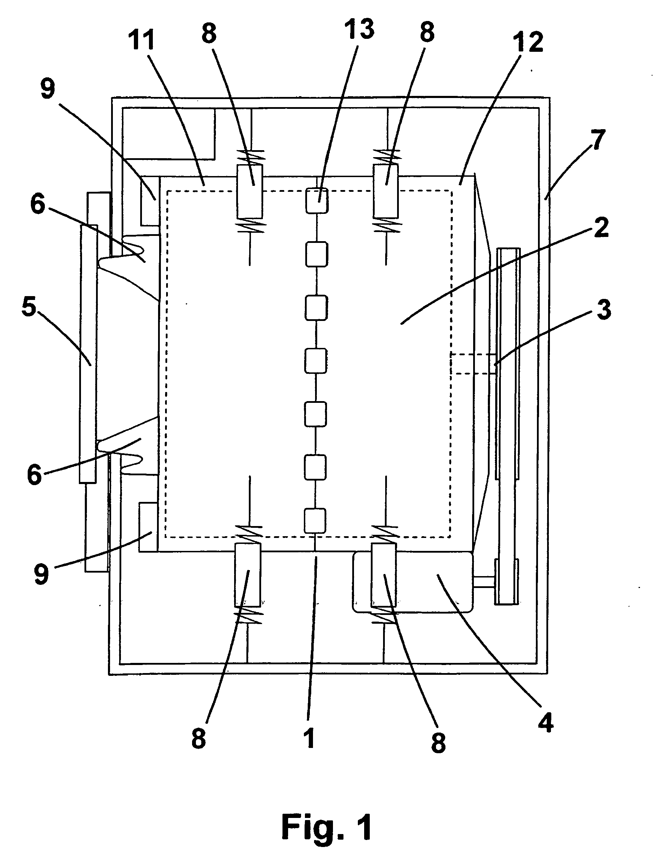

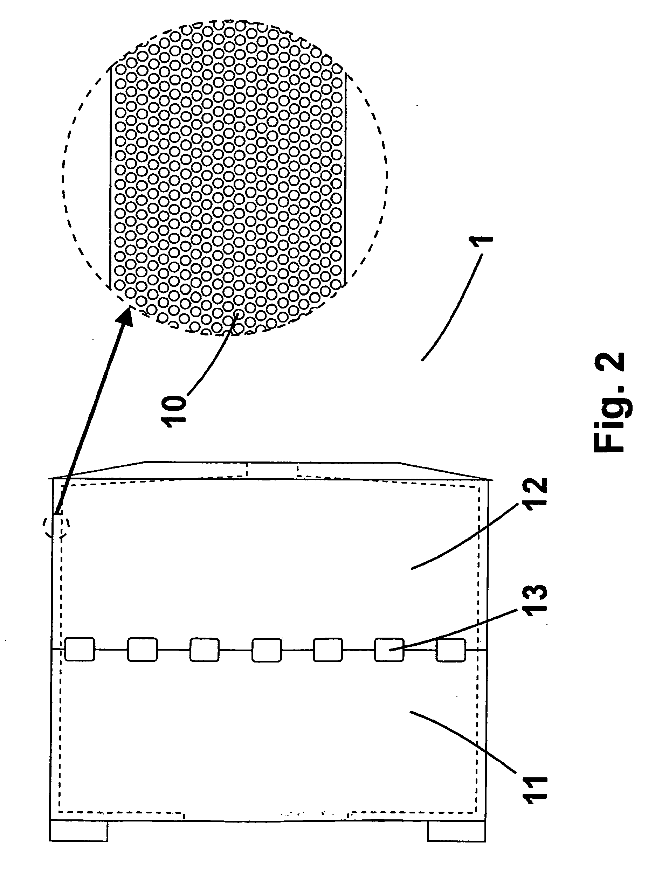

In order to gain a better understanding of the subject matter of the present invention, the attached drawing depicts a practical preferred embodiment of the lightweight structure of washtub for washing machine.

In said drawing figure -1- shows, by way of an example, a schematic lateral view of a generic type of washing machine, with separate motor, showing the main constituent parts.

Figure -2- shows a lateral view of an example of a lightened washtub, with an enlarged detail of the alveolar structure of its walls.

The lightened structure of washtub for washing machine that is the subject matter of the present invention, is applicable to automatic type washing machines of the rotary drum type, including a washtub (1) to store washing water, a drum (2) made of a metal mounted in a rotary manner inside the washtub (1), a rotation shaft (3) connected to the drum (2) mounted inside the washtub (1) that passes through one of the walls of said washtub (1) by means of the necessary tight bearings or ball bearings , to transmit a driving force coming from an electric motor (4), an access door (5) to load and unload dirty clothes, normally located at the end opposite to the rotation shaft (3) and linked to the washtub (1) by means of a flexible tubular bellows (6) that ensures the leaktightness of the assembly.

The washtub (1), and hence the drum (2) housed inside it, is suspended from the casing (7) of the washing machine by means of springs or dampeners (8) and is fitted with counterweights (9) to stabilize the assembly during the rotation of the drum (2) and centrifuging.

As can be seen in the attached drawing, the washtub (1), is basically formed by walls with an alveolar structure, formed from preferably mould-injected thermoplastic material, which includes in said material a large quantity of diminutive holes (10) of spherical or quasi-spherical shape, of a variable size and of random distribution, that lighten the weight of washtub without detriment to its mechanical properties or leaktightness. The holes or cavities (10) of spherical or quasi-spherical shape, a large number of which are inserted in the material of the walls of the washtub (1) are of a sufficiently small size as to not reduce the leaktightness of the washtub (1), but they allow a considerable lightening of its weight, with the subsequent savings in the thermoplastic material used in its manufacture. The characteristic alveolar structure provides, by means of the high structural resistance characteristic of the walls of the spherical or quasi-spherical holes or cavities (10), together with the continuity of the material, a rigidity and resistance of the washtub (1) that is in accordance with its use and which clearly exceeds the mechanical characteristics of the conventionally used solid walls.

The external embodiment of the washtub (1) is carried out preferably in two parts (11, 12) connected together to form the assembly by means of various tabs (13) or any other type of conventionally used mechanical coupling, adopting the opportune structural modifications in walls, ribs and reinforcements that are necessary in accordance with the technology used.

It was decided to omit a detailed description of the other particular features of the device being disclosed or of the components forming part of it, as it was felt that the rest of said particular features are not the object of any claims.

Having described the nature of the present invention in sufficient detail, in addition to a means for putting it into practice, all that remains to be added is that its description is not restrictive, and that variations both in materials and forms or sizes can be made provided that said variations do not alter the essential nature of the characteristics claimed below.

## Claims

1. Lightweight washtub structure for washing machine of the type formed by parts (11, 12) connected together to form the washtub (1) assembly by means of various tabs (13) or any other type of mechanical coupling conventionally used and employed in washing machines, comprising a washtub (1) to store the washing water, a drum (2) of metal mounted in a rotary manner inside the washtub (1), a rotation shaft (3) connected to the drum (2) mounted inside the washtub (1) that passes through one of the walls of said washtub (1) by means of the necessary tight bearings or ball bearings, for the transmission of a driving force coming from an electric motor (4), an access door (5) normally located at the opposite end to the rotation shaft (3) and linked to the washtub (1) by means of a flexible tubular bellows (6), **characterized in that** the washtub comprises walls with an alveolar structure, made of mould-injected thermoplastic material, which includes in said material a large quantity of diminutive holes (10) of spherical or quasi-spherical shape, of random distribution, and with a sufficiently small size so as to not reduce the leaktightness of the washtub (1).

## Patentansprüche

1. Eine Leichtbau-Waschbottich-Struktur für eine Waschmaschine der Art, die aus den Teilen (11, 12) gebildet ist, die durch verschiedene Laschen (13) oder jede andere Art einer mechanischen Kopplung die üblicherweise in Waschmaschinen verwendet und eingesetzt wird, miteinander verbunden sind, um die Waschbottich (1)-Baugruppe zu bilden, mit
einem Waschbottich (1) zur Speicherung des Waschwassers,
einer Trommel (2) aus Metall, die drehbar innerhalb des Waschbottichs (1) angeordnet ist,
einer mit der Trommel (2) verbundenen Drehwelle (3), innerhalb des Waschbottichs (1), die eine der Wände des Waschbottichs (1) durch die erforderlichen Festlager oder Kugellager für die Übertragung einer Antriebskraft aus einem Elektromotor (4) durchquert,
einer Zugangstür (5), die normalerweise am entgegengesetzten Ende der Drehwelle (3) angeordnet und mit dem Waschbottich (1) mittels eines flexiblen rohrförmigen Faltenbalg (6) verbunden ist, **dadurch gekennzeichnet, dass**
der Waschbottich (1) Wände mit einer alveolaren Struktur aufweist, ausgebildet aus einem Spritzguss-Themoplastmaterial, das in dem Material eine große Anzahl von sehr kleinen Löchem (10), kugelförmiger oder fast kugelförmiger Ausbildung, einer zufälligen Verteilung und mit einer ausreichend kleinen Größe, um nicht die Dichtheit des Waschbottich (1) zu reduzieren, einschließt.

## Revendications

1. Structure légère pour lave-linge du type de ceux formés par des parties (11, 12) connectées entre elles pour former l'assemblage de la cuve de lavage (1) au moyen de différents onglets (13) ou de tout autre type de couplage mécanique utilisé et employé traditionnellement dans les lave-linge, comprenant
une cuve de lavage (1) pour stocker l'eau de lavage,
un tambour métallique (2) monté de manière à pouvoir tourner à l'intérieur de la cuve de lavage (1),
un arbre tournant (3) connecté au tambour (2) monté à l'intérieur de la cuve de lavage (1) passant au travers d'une des parois de la dite cuve de lavage (1) au moyen de paliers étanches ou de paliers à billes nécessaires à la transmission d'une force motrice provenant d'un moteur électrique (4),
une porte d'accès (5) normalement située à l'extrémité opposée de l'arbre tournant (3) et reliée à la cuve de lavage (1) au moyen d'un soufflet tubulaire flexible (6),
**caractérisée en ce que** la cuve de lavage comprend des parois avec une structure alvéolée faite d'une matière thermoplastique moulée par injection, les parois comprenant dans cette matière un large nombre de trous minuscules (10) de forme sphérique ou quasi sphérique, de répartition aléatoire et ayant une taille suffisamment petite pour ne pas réduire l'étanchéité de la cuve de lavage (1).
